# EUROPÄISCHE PATENTSCHRIFT

(11) **EP 3 554 855 B1**
(45) Veröffentlichungstag und Bekanntmachung des Hinweises auf die Patenterteilung: **13.10.2021**
(21) Anmeldenummer: 17786906.2
(22) Anmeldetag: 19.10.2017
(51) Int. Cl.: B60C 11/12

(54) **FAHRZEUGLUFTREIFEN**
PNEUMATIC VEHICLE TYRE
PNEUMATIQUE DE VÉHICULE

(30) Priorität: 13.12.2016 DE 102016224803
(43) Veröffentlichungstag der Anmeldung: 23.10.2019
(73) Patentinhaber: Continental Reifen Deutschland GmbH, 30165 Hannover (DE)
(72) Erfinder: JACKSTADT, Michael, 30989 Gehrden (DE); SENG, Matthias, 30453 Hannover (DE); DZICK, Jürgen, 30926 Seelze (DE); EWALD, Denise, 30159 Hannover (DE)
(74) Vertreter: Continental Corporation
(86) Internationale Anmeldenummer: PCT/EP2017/076652
(87) Internationale Veröffentlichungsnummer: WO 2018/108358

(56) Entgegenhaltungen:
- EP-A1- 1 974 956
- WO-A1-01/60642
- WO-A1-2010/063558
- JP-A- H11 105 512
- JP-A- 2000 177 330
- JP-A- 2002 316 517
- JP-A- 2009 126 293
- JP-A- 2013 006 549

## Beschreibung

Die Erfindung betrifft einen Fahrzeugluftreifen mit einem Laufstreifen mit durch Umfangs- oder Schrägrillen und durch Querrillen gebildeten Profilblöcken, welche jeweils mit zumindest einem in Draufsicht gerade oder durchgehend leicht gebogen und sich zumindest im Wesentlichen parallel zu den Querrillen erstreckenden Einschnitt mit einer Breite von 0,3 mm bis 2,0 mm versehen sind, wobei der Einschnitt von zwei Einschnittwänden begrenzt ist, und wobei an den ansonsten unstrukturierten Einschnittwänden jeweils zwei oder drei Vorsprünge ausgebildet sind, wobei die Vorsprünge exakt in radialer Richtung oder zur radialen Richtung unter einem Winkel von bis zu 20°, insbesondere von bis zu 10°, verlaufen.

Ein derartiger Fahrzeugluftreifen ist beispielsweise aus der JP 2009 126 293 A bekannt. Der Reifen weist einen Laufstreifen mit Profilblöcken mit Einschnitten auf, welche gemäß einer Variante an jeder Einschnittwand mit drei in der Erstreckungsrichtung des Einschnittes nebeneinander ausgebildeten, quaderförmigen Vorsprüngen versehen sind. Die Vorsprünge verlaufen in radialer Richtung oder zur radialen Richtung unter einem Winkel von vorzugsweise bis zu 20°. Die gegenüber dem Niveau der Einschnittwand ermittelte Breite der Vorsprünge nimmt vom radial äußeren Ende der Vorsprünge zum radial inneren Ende der Vorsprünge ab.

Die DE 10 2010 000 272 A1 offenbart einen weiteren Fahrzeugluftreifen mit einem Laufstreifen mit Profilblöcken, die mit Einschnitten versehen sind. An gegenüberliegenden Einschnittwänden sind miteinander korrespondierende Vorsprünge und Vertiefungen ausgebildet. Die Vorsprünge sind jeweils als gerundete Erhebungen ausgeführt und von unstrukturierten Wandbereichen umgeben. Im radial äußeren Bereich der einen Einschnittwand sind an einzelnen Stellen Vorsprünge angeordnet, die jeweils eine abgeflachte Seite aufweisen, welche eine Stützfläche bildet, die in radialer Richtung sowie im Wesentlichen senkrecht zur Einschnittwand orientiert ist. Im radial inneren Bereich der Einschnittwand sind Vorsprünge angeordnet, welche eine abgeflachte Seite aufweisen, welche eine Stützfläche bildet, die im Wesentlichen parallel zur Profilpositivoberfläche orientiert ist. Durch diese Maßnahmen soll die Steifigkeit der Profilpositive derart beeinflusst werden, dass die Profilpositive bei fortschreitendem Abrieb zunächst Seitenkräfte gut aufnehmen und später Umfangskräfte optimal verteilen können, um einen gleichmäßigen Abrieb zu ermöglichen.

Fahrzeugluftreifen mit Einschnitten aufweisenden Laufstreifen sind für den Einsatz unter winterlichen Fahrbedingungen üblich. Die Einschnitte tragen maßgeblich zu guten Griffeigenschaften sowie gutem Traktions- und Bremsverhalten auf Nässe sowie auf eis- und/ oder schneebedecktem Untergrund bei. Üblicherweise weisen Einschnitte Breiten von 0,3 mm bis 2,0 mm, insbesondere bis 0,8 mm, auf, wobei sich die Einschnitte im Wesentlichen in Querrichtung des Laufstreifen oder, je nach der Laufstreifenprofilierung, auch zur Querrichtung unter einem Winkel von bis zu ca. 50° erstrecken können. Zur Bildung der Einschnitte bei der Vulkanisation des Reifens sind in den den Laufstreifen ausformenden Formteilen bzw. Formsegmenten der Vulkanisationsform entsprechend gestaltete Lamellenbleche verankert.

Lamellenbleche, welche in Draufsicht gerade oder leicht bogenförmig verlaufende Einschnitte ausformen, werden aus Stabilitätsgründen etwas dicker ausgeführt als Lamellenbleche, welche beispielsweise in Draufsicht wellenförmige Einschnitte bilden. Dementsprechend sind gerade oder leicht bogenförmig verlaufende Einschnitte - im Vergleich zu anderen Einschnitten - meist breiter ausgeführt. Diese breiteren, gerade verlaufenden Einschnitte tragen zum Abrollgeräusch des Reifens mehr bei als etwa wellenförmig verlaufende Einschnitte, da sie einen größeren Resonanzraum bilden.

Der Erfindung liegt die Aufgabe zugrunde, bei einem Reifen der eingangs genannten Art den von in Draufsicht gerade oder leicht gebogen verlaufenden Einschnitten herrührenden Anteil am Abrollgeräusch zu reduzieren.

Die gestellte Aufgabe wird erfindungsgemäß dadurch gelöst, dass sämtliche an der einen Einschnittwand ausgebildeten Vorsprünge gegenüber sämtlichen an der anderen Einschnittwand ausgebildeten Vorsprüngen in Erstreckungsrichtung des Einschnittes ohne gegenseitige Überlappung versetzt sind und wobei, in der Erstreckungsrichtung des Einschnittes betrachtet, die Vorsprünge einander abwechseln, wobei entweder die Vorsprünge zumindest an ihren in radialer Richtung befindlichen Endbereichen einen knickfreien Übergang zur Einschnittwand aufweisen oder, im Längsschnitt durch die Vorsprünge betrachtet, Tangenten durch Punkte an ihre in radialer Richtung befindlichen Endbereiche mit der jeweiligen Einschnittwand einen Winkel von 10° bis 30° einschließen.

Durch die gemäß der Erfindung an den einander gegenüberliegenden Einschnittwänden versetzt zueinander angeordneten Vorsprüngen lassen sich durch die "Teilung" des Resonanzraumes Anregungen von Eigenfrequenzen innerhalb des Einschnittes deutlich vermindern. Zusätzlich bewirken die Vorsprünge bei Querkräften eine Versteifung der Profilpositive, wodurch die Handlingeigenschaften des Reifens günstig beeinflusst werden. Die Vorsprünge können dadurch auch dazu beitragen, die Abriebsperformance des Laufstreifens zu verbessern.

Die erfindungsgemäße Ausführung mit mehr als einem Vorsprung pro Einschnittwand ist einerseits besonders vorteilhaft, weil sie ein Anregen von Eigenfrequenzen innerhalb des Einschnittes besonders gut vermeidet und andererseits eine besonders gute Abstützung bei Querkräften bewirkt.

Unter der Wirkung von Querkräften wird das Entstehen von Einrissen an den Einschnittwänden im Bereich der Vorsprünge vermieden.

Besonders bevorzugt ist ferner eine Ausführung, bei der die Vorsprünge an der jeweiligen Einschnittwand in radialer Richtung eine Längserstreckung von 3,0 mm bis 7,0 mm aufweisen. Je größer die Längserstreckung umso mehr behalten die Vorsprünge ihre Wirkung bei fortschreitendem Abrieb des Laufstreifens.

Bei einer weiteren vorteilhaften Ausführung der Erfindung weisen die Vorsprünge senkrecht zur Einschnittwand eine Höhe auf, welche 20% bis 80%, insbesondere 30% bis 50%, der Breite des Einschnittes beträgt. Die Höhe der Vorsprünge hat insbesondere Auswirkungen auf den mit ihnen erzielbaren Abstützeffekt.

Die Breite der Vorsprünge, quer zu ihrer Längserstreckung in radialer Richtung, kann 1,0 mm bis 8,0 mm insbesondere von bis zu 4,0 mm, betragen.

Bevorzugt ist ferner eine Ausführungsform der Vorsprünge mit einer gerundeten Außenseite, sodass sie bei Querkräften nicht beschädigt werden.

Es kann vorgesehen sein, dass die auf einer Einschnittwand ausgebildeten Vorsprünge unterschiedliche Längen und/oder unterschiedliche Breiten und/oder unterschiedliche Höhen aufweisen. Des Weiteren kann vorgesehen sein, dass in einem Einschnitt an einer Einschnittwand zumindest ein Vorsprung ausgebildet ist, welcher sich von zumindest einem Vorsprung an der gegenüberliegenden Einschnittwand in der Länge und/oder der Breite und/oder der Höhe unterscheidet. Insbesondere solche Ausführungsvariationen sind für eine Verminderung des Abrollgeräusches besonders vorteilhaft.

Weitere Merkmale, Vorteile und Einzelheiten der Erfindung werden nun anhand der Zeichnung, die schematisch Ausführungsbeispiele der Erfindung darstellt, näher beschrieben. Dabei zeigen
Fig. 1 eine Draufsicht auf einen Laufstreifenbereich eines Fahrzeugluftreifens,
Fig. 1a eine Ansicht auf eine Einschnittwand mit einer Ausführungsvariante der Erfindung
Fig. 1b eine Ansicht auf eine Einschnittwand mit einer weiteren Ausführungsvariante der Erfindung,
Fig. 2a einen Schnitt entlang der Linie IIa-IIa der Fig. 2
Fig. 2b einen Schnitt entlang analog zu Fig. 2a mit einer Variante der Erfindung und
Fig. 3 ein Lamellenblech einer Vulkanisationsform in Schrägansicht.

Die Erfindung befasst sich mit der Ausgestaltung von Einschnitten in Laufstreifen von Fahrzeugluftreifen in Radialbauart, insbesondere Fahrzeugluftreifen für Personenkraftwagen, Vans oder Light-Trucks.

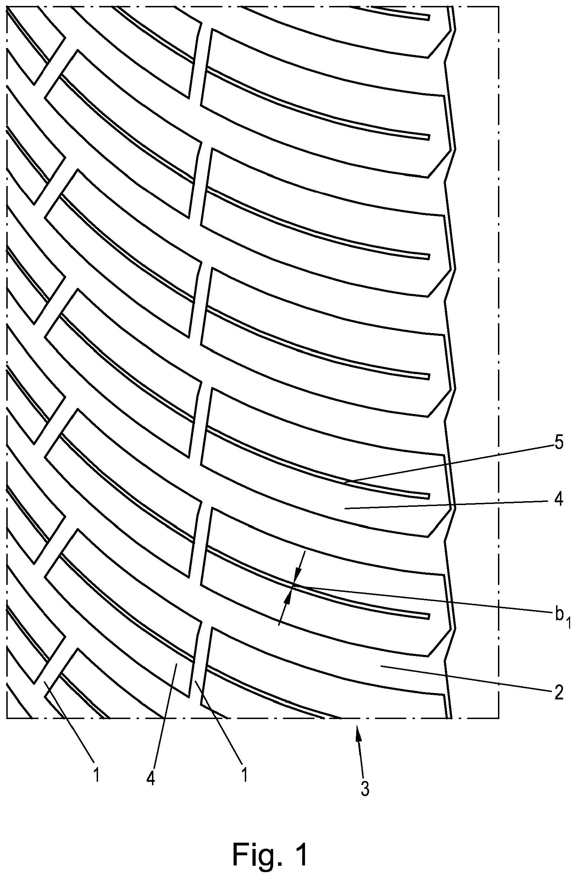

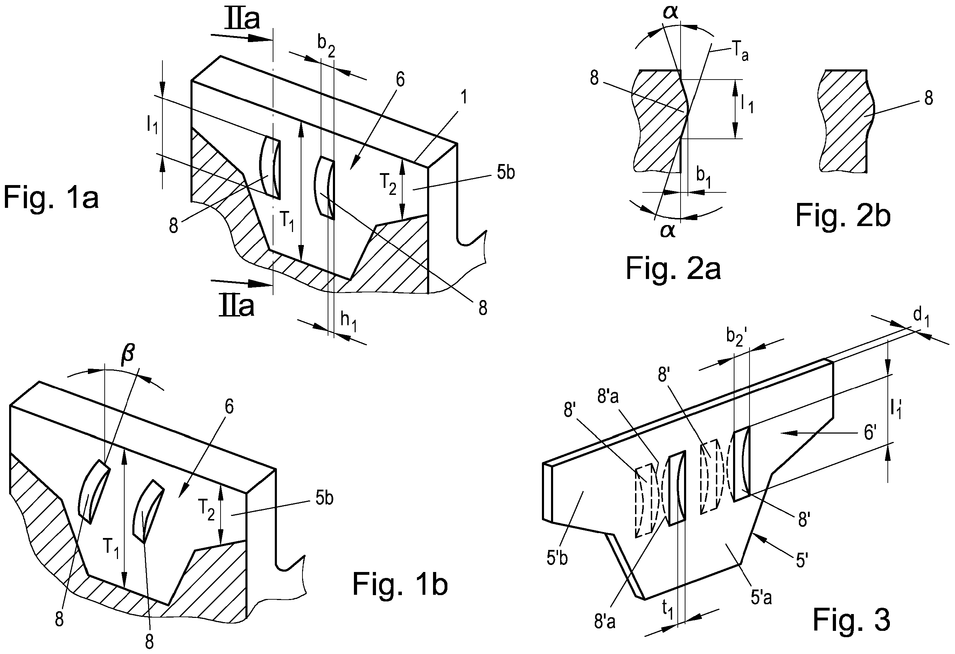

Der in Fig. 1 beispielhaft gezeigte Laufstreifenbereich ist durch Umfangs-bzw. Schrägrillen 1 und Querrillen 2 in Profilblockreihen 3 mit Profilblöcken 4 gegliedert. Die Querrillen 2 verlaufen parallel zueinander unter einem spitzen Winkel zur Umfangsrichtung, welcher zum Laufstreifenrand zu größer wird. In den Profilblöcken 4 ist jeweils etwa mittig ein parallel zu den Querrillen 2 und in Draufsicht gerade oder leicht bogenförmig verlaufender Einschnitt 5 ausgebildet, welcher durch zwei einander gegenüberliegende Einschnittwände 6 begrenzt ist, von welchen in Fig. 1a und 1b jeweils die eine zu sehen ist. Bei anderen Ausführungen des Laufstreifen können Profilblöcke mit mehr als einem Einschnitt 5 vorgesehen sein.

Der Fahrzeugluftreifen wird in bekannter Weise mittels einer Vulkanisationsform ausgeformt, welche mit Formsegmenten bzw. Formteilen versehen ist, die den Laufstreifen mit seiner Profilierung versehen, wobei zur Bildung der Einschnitte 5 im Laufstreifen an der Innenseite der Formsegmente bzw. Formteile Lamellenbleche verankert sind. Fig. 3 zeigt vereinfacht jenen Teil eines Lamellenbleches 5', welcher einen Einschnitt im Gummi des Laufstreifens formt. Das Lamellenblech 5 'weist eine insbesondere konstante Dicke d₁ von 0,3 mm bis 2,0 mm, vorzugsweise bis zu 0,8 mm, auf, sodass die Einschnitte 5 dementsprechend eine Breite b₁ (Fig. 1a) von 0,3 mm bis 2,0 mm, vorzugsweise bis zu 0,8 mm, aufweisen.

Das dargestellte Lamellenblech 5' bildet im Laufstreifen einen Einschnitt 5 mit einer über den Einschnittverlauf variierenden Tiefe (Fig. 1a, 1b) und weist einen mittleren Lamellenteil 5'a und zwei seitliche Lamellenteile 5'b auf Wie Fig. 1a und Fig. 1b zeigen, weisen der Einschnitt 5 und daher die gezeigte Einschnittwand 6 einen durch den mittleren Lamellenteil 5'a geformten tiefen mittleren Abschnitt 5a und zwei an diesen anschließende seichtere seitliche Abschnitt 5b auf, welche von den seitlichen Lamellenteilen 5'b geformt sind. Der mittlere Abschnitt 5a erstreckt sich in radialer Richtung bis in eine Tiefe T₁ von beispielsweise 6,0 mm bis 9,0 mm, die seitlichen Abschnitte 5b erstrecken sich in radialer Richtung bis in eine Tiefe T₂, welche vorzugsweise höchstens 70% der Tiefe T₁ beträgt und zu den seitlichen Rändern der Einschnittwand 6 abnimmt.

Das Lamellenblech 5' weist zwei, bis auf Vertiefungen 8' unstrukturierte Seitenflächen 6' auf, welche bei der Vulkanisation die Einschnittwände 6 des Einschnittes 5 ausbilden. An jeder Seitenfläche 6' sind im mittleren Lamellenteil 5'a jeweils zwei seichte und in radialer Richtung langgestreckte Vertiefungen 8' ausgebildet. Die an der einen Seitenfläche 6' ausgebildeten Vertiefungen 8' sind gegenüber den an der anderen Seitenfläche 6' ausgebildeten Vertiefungen 8' in Richtung der Längserstreckung des Lamellenbleches 5' gegeneinander versetzt, wobei jeweils eine Vertiefung 8' auf der einen Seitenfläche 6' mit einer Vertiefung 8' auf der anderen Seitenfläche 6' abwechselt und die an der einen Seitenfläche 6' ausgebildeten Vertiefungen 8' mit den Vertiefungen 8', die an der anderen Seitenfläche 6' ausgebildet sind, nicht überlappen. Die Vertiefungen 8' werden bei der Herstellung des Lamellenbleches 5' mitgebildet.

Jede Vertiefung 8' weist entlang einer Mittellinie in Richtung ihrer radialen Erstreckung eine Länge l₁' (Fig. 3) von 3,0 mm bis 7,0 mm auf. Ferner weist jede Vertiefung 8' an ihrer breitesten Stelle an der Seitenfläche 6' eine senkrecht zu ihrer Mittellinie ermittelte Breite b₂' von 1,0 mm bis 8,0 mm, insbesondere bis zu 4,0 mm, auf, sodass bei einer bevorzugten Ausführung der Vertiefungen 8' ihre Länge l₁' größer ist als ihre Breite b₂'.

Jede Vertiefung 8' ist durch einen in ihrer radialen Erstreckung gekrümmten Boden 8'a begrenzt, wobei jede Vertiefung 8' vorzugsweise in ihrer Mitte gegenüber der Seitenfläche 6' ihre größte Tiefe t₁' aufweist, welche 20% bis 80%, insbesondere 30% bis 50%, der Dicke d₁ des Lamellenbleches 5' beträgt.

Bei der gezeigten Ausführungsvariante weisen die Vertiefungen 8' ferner kreissegmentförmige bzw. im Wesentlichen kreissegmentförmige Seitenflächen (in den Figuren nicht bezeichnet) auf, welche gemeinsam mit dem Boden 8'a die Vertiefungen 8' begrenzen und dementsprechend zwischen dem Boden 8'a und der Seitenfläche 6' verlaufen. Bei einer alternativen, nicht gezeigten Ausführung können die Vertiefungen 8' insgesamt gerundet ausgeführt sein.

Die in Fig. 1a beispielhaft gezeigte Einschnittwand 6 ist mit der rückwärtigen Seitenfläche 6' des Lamellenbleches 5' ausgebildet und weist daher zwei in radialer Richtung langgestreckte Vorsprünge 8 auf, deren Länge l₁ entsprechend der Länge der Vertiefungen 8' 3,0 mm bis 7,0 mm beträgt. Ferner weisen die Vorsprünge 8 eine größte Breite b₂ auf, die entsprechend der Breite b₂' der Vertiefungen 8' 1,0 mm bis 8,0 mm, insbesondere bis zu 4,0 mm, beträgt. Senkrecht zur Einschnittwand 6 weisen die Vorsprünge 8 entsprechend der Tiefe t₁' der Vertiefungen 8' eine Höhe h₁ auf, die 20% bis 80%, insbesondere 30% bis 50%, der Breite b₁ des Einschnittes 5 beträgt. Die Außenfläche der Vorsprünge 8 ist gerundet, wie es in Fig. 2a gezeigt ist, wobei Tangenten Tₐ durch Punkte an den Längsenden der Vorsprünge 8 mit der Einschnittwand 6 einen Winkel α von 10° bis 30° einschließen.

Fig. 2b zeigt eine Ausführungsvariante, bei welcher ein Vorsprung 8 an seinen in der Längserstreckung liegenden Enden über Rundungen knickfrei in die Einschnittwand 6 übergeht.

Entsprechend der Positionen der Vertiefungen 8' im Lamellenblech 5' sind die an der einen Einschnittwand 6 ausgebildeten Vorsprünge 8 gegenüber den an der anderen Einschnittwand 6 von den Vertiefungen 8' ausgebildeten Vorsprünge 8 in Erstreckungsrichtung des Einschnittes 5 versetzt, sodass die Vorsprünge 8 an einander nicht gegenüberliegenden Bereichen der Einschnittwände 6 ausgebildet sind.

Wie die Variante in Fig. 1b zeigt, können die Vorsprünge 8 und somit auch die an der gegenüberliegenden Einschnittwand versetzt ausgebildeten Vorsprünge 8 unter einem Winkel β von bis zu 20° zur radialen Richtung verlaufen. Gemäß einer nicht erfindungsgemäßen Variante ist eine Kombination von zumindest einem in radialer Richtung verlaufenden Vorsprung 8 mit zumindest einem zur radialen Richtung geneigt verlaufenden Vorsprung 8 pro Einschnittwand 6 vorgesehen.

Sämtliche Vorsprünge 8 an den Wänden 6 eines Einschnitts 5 sind übereinstimmend ausgestaltet. Gemäß einer weiteren nicht erfindungsgemäßen Variante weisen die auf einer Einschnittwand 6 ausgebildeten Vorsprünge 8 unterschiedliche Längen l₁ und/oder unterschiedliche Breiten b₁ und/oder unterschiedliche Höhen h₁ auf.

Profilblöcke 4 mit je einem erfindungsgemäß gestalteten Einschnitt 5 sind insbesondere Schulterblöcke, zwischen welchen im Wesentlichen in Querrichtung verlaufende Querrillen 2 vorhanden sind, wie in Fig. 1 gezeigt.

### Bezugsziffernliste

- 1: Umfangsrille
- 2: Querrille
- 3: Profilblockreihe
- 4: Profilblock
- 5: Einschnitt
- 5': Lamellenblech
- 5'a, 5'b: Lamellenteil
- 6: Einschnittwand
- 5a: mittlerer Abschnitt
- 5b: seitlicher Abschnitt
- 6': Seitenfläche
- 8: Vorsprung
- 8': Vertiefung
- 8'a: Boden
- b₁, b₂, b₂': Breite
- d₁: Dicke
- h₁: Höhe
- l₁, l₁': Länge
- t₁: Tiefe
- T₁, T₂: Tiefe
- Tₐ: Tangente
- α, β: Winkel

## Patentansprüche

1. Fahrzeugluftreifen mit einem Laufstreifen mit durch Umfangs- oder Schrägrillen (1) und durch Querrillen (2) gebildeten Profilblöcken (4), welche jeweils mit zumindest einem in Draufsicht gerade oder durchgehend leicht gebogen und sich zumindest im Wesentlichen parallel zu den Querrillen (2) erstreckenden Einschnitt (5) mit einer Breite von 0,3 mm bis 2,0 mm versehen sind, wobei der Einschnitt (5) von zwei Einschnittwänden (6) begrenzt ist, und wobei an den ansonsten unstrukturierten Einschnittwänden (6) jeweils zwei oder drei Vorsprünge (8) ausgebildet sind, wobei die Vorsprünge (8) exakt in radialer Richtung oder zur radialen Richtung unter einem Winkel von bis zu 20°, insbesondere von bis zu 10°, verlaufen,
**dadurch gekennzeichnet,**
**dass** sämtliche an der einen Einschnittwand (6) ausgebildeten Vorsprünge (8) gegenüber sämtlichen an der anderen Einschnittwand (6) ausgebildeten Vorsprüngen (8) in Erstreckungsrichtung des Einschnittes (5) ohne gegenseitige Überlappung versetzt sind und wobei, in der Erstreckungsrichtung des Einschnittes (5) betrachtet, die Vorsprünge (8) einander abwechseln, wobei entweder die Vorsprünge (8) zumindest an ihren in radialer Richtung befindlichen Endbereichen einen knickfreien Übergang zur Einschnittwand (6) aufweisen oder, im Längsschnitt durch die Vorsprünge (8) betrachtet, Tangenten (Tₐ) durch Punkte an ihre in radialer Richtung befindlichen Endbereiche mit der jeweiligen Einschnittwand (6) einen Winkel (α) von 10° bis 30° einschließen.

2. Fahrzeugluftreifen nach Anspruch 1, **dadurch gekennzeichnet, dass** die Vorsprünge (8) an der jeweiligen Einschnittwand (6) in radialer Richtung eine Erstreckung (l₁) von 3,0 mm bis 7,0 mm aufweisen.

3. Fahrzeugluftreifen nach Anspruch 1 oder 2, **dadurch gekennzeichnet, dass** die Vorsprünge (8) senkrecht zur Einschnittwand (6) eine Höhe (h₁) aufweisen, welche 20% bis 80%, insbesondere 30% bis 50%, der Breite des Einschnittes (5) beträgt.

4. Fahrzeugluftreifen nach einem der Ansprüche 1 bis 3, **dadurch gekennzeichnet, dass** die Vorsprünge (8), quer zu ihrer Erstreckung in radialer Richtung, eine größte Breite (b₂) von 1,0 mm bis 8,0 mm, insbesondere von bis 4,0 mm, aufweisen.

5. Fahrzeugluftreifen nach einem der Ansprüche 1 bis 4, **dadurch gekennzeichnet, dass** die Außenseite der Vorsprünge (8) gerundet ist.

6. Fahrzeugluftreifen nach einem der Ansprüche 1 bis 5, **dadurch gekennzeichnet, dass** die in einem Einschnitt (5) auf einer Einschnittwand (6) ausgebildeten Vorsprünge (8) unterschiedliche Längen (l₁) und/oder unterschiedliche Breiten (b₁) und/oder unterschiedliche Höhen (h₁) aufweisen.

7. Fahrzeugluftreifen nach einem der Ansprüche 1 bis 6, **dadurch gekennzeichnet, dass** in einem Einschnitt (5) an einer Einschnittwand (6) zumindest ein Vorsprung (8) ausgebildet ist, welcher sich von zumindest einem Vorsprung (8) an der anderen Einschnittwand (6) in der Länge (l₁) und/oder der Breite (b₂) und/oder der Höhe (h₁) unterscheidet.

## Claims

1. Pneumatic vehicle tyre having a tread with profile blocks (4) formed by circumferential or diagonal grooves (1) and by transverse grooves (2), said profile blocks (4) each being provided with at least one sipe (5) that is straight or continuously slightly curved in plan view, extends at least substantially parallel to the transverse grooves (2) and has a width of 0.3 mm to 2.0 mm, wherein the sipe (5) is bounded by two sipe walls (6), and wherein two or three protrusions (8) are formed on each of the otherwise unstructured sipe walls (6), wherein the protrusions (8) extend exactly in the radial direction or at an angle of up to 20°, in particular of up to 10°, to the radial direction, **characterized**
**in that** all the protrusions (8) formed on one sipe wall (6) are offset in the direction of extent of the sipe (5) with respect to all the protrusions (8) formed on the other sipe wall (6), without a mutual overlap, and wherein, as seen in the direction of extent of the sipe (5), the protrusions (8) alternate with one another, wherein either the protrusions (8) transition into the sipe wall (6) without a bend at least in their end regions located in the radial direction, or, as seen in longitudinal section through the protrusions (8), tangents (Tₐ) through points in their end regions located in the radial direction enclose an angle (α) of 10° to 30° with the respective sipe wall (6).

2. Pneumatic vehicle tyre according to Claim 1, **characterized in that** the protrusions (8) have an extent (l₁) of 3.0 mm to 7.0 mm in the radial direction on the respective sipe wall (6).

3. Pneumatic vehicle tyre according to Claim 1 or 2, **characterized in that** the protrusions (8) have a height (h₁), perpendicular to the sipe wall (6), that is 20% to 80%, in particular 30% to 50%, of the width of the sipe (5).

4. Pneumatic vehicle tyre according to one of Claims 1 to 3, **characterized in that** the protrusions (8) have a greatest width (b₂) of 1.0 mm to 8.0 mm, in particular of up to 4.0 mm, transversely to their extent in the radial direction.

5. Pneumatic vehicle tyre according to one of Claims 1 to 4, **characterized in that** the outer side of the protrusions (8) is rounded.

6. Pneumatic vehicle tyre according to one of Claims 1 to 5, **characterized in that** the protrusions (8) formed on one sipe wall (6) in one sipe (5) have different lengths (l₁) and/or different widths (b₁) and/or different heights (h₁).

7. Pneumatic vehicle tyre according to one of Claims 1 to 6, **characterized in that**, on one sipe wall (6) in one sipe (5), at least one protrusion (8) is formed which differs from at least one protrusion (8) on the other sipe wall (6) in terms of length (l₁) and/or width (b₂) and/or height (h₁).

## Revendications

1. Pneumatique de véhicule comprenant une bande de roulement pourvue de blocs profilés (4) formés par des rainures périphériques ou obliques (1) et par des rainures transversales (2), qui sont chacun munis d'au moins une entaille (5) droite ou légèrement courbée de manière continue en vue de dessus et s'étendant au moins essentiellement parallèlement aux rainures transversales (2), ayant une largeur de 0,3 mm à 2,0 mm, l'entaille (5) étant délimitée par deux parois d'entaille (6), et deux ou trois saillies (8) étant formées à chaque fois sur les parois d'entaille (6) autrement non structurées, les saillies (8) s'étendant exactement dans la direction radiale ou à un angle de jusqu'à 20°, notamment de jusqu'à 10°, par rapport à la direction radiale,
**caractérisé en ce que**
toutes les saillies (8) formées sur une paroi d'entaille (6) sont décalées par rapport à toutes les saillies (8) formées sur l'autre paroi d'entaille (6) dans la direction d'étendue de l'entaille (5) sans chevauchement mutuel et, tel qu'observé dans la direction d'étendue de l'entaille (5), les saillies (8) sont en alternance les unes avec les autres,
soit les saillies (8) présentant, au moins au niveau de leurs zones d'extrémité se trouvant dans la direction radiale, une transition sans coude vers la paroi d'entaille (6),
soit, tel qu'observé dans la coupe longitudinale à travers les saillies (8), des tangentes (Tₐ) passant à travers des points au niveau de leur zones d'extrémité se trouvant dans la direction radiale formant un angle (α) de 10° à 30° avec la paroi d'entaille respective (6) .

2. Pneumatique de véhicule selon la revendication 1, **caractérisé en ce que** les saillies (8) présentent une étendue (l₁) de 3,0 mm à 7,0 mm sur la paroi d'entaille respective (6) dans la direction radiale.

3. Pneumatique de véhicule selon la revendication 1 ou 2, **caractérisé en ce que** les saillies (8) présentent, perpendiculairement à la paroi d'entaille (6), une hauteur (h₁) qui est de 20 % à 80 %, notamment de 30 % à 50 %, de la largeur de l'entaille (5).

4. Pneumatique de véhicule selon l'une quelconque des revendications 1 à 3, **caractérisé en ce que** les saillies (8) présentent, perpendiculairement à leur étendue dans la direction radiale, une largeur maximale (b₂) de 1,0 mm à 8,0 mm, notamment de jusqu'à 4,0 mm.

5. Pneumatique de véhicule selon l'une quelconque des revendications 1 à 4, **caractérisé en ce que** le côté extérieur des saillies (8) est arrondi.

6. Pneumatique de véhicule selon l'une quelconque des revendications 1 à 5, **caractérisé en ce que** les saillies (8) formées dans une entaille (5) sur une paroi d'entaille (6) présentent différentes longueurs (l₁) et/ou différentes largeurs (b₁) et/ou différentes hauteurs (h₁).

7. Pneumatique de véhicule selon l'une quelconque des revendications 1 à 6, **caractérisé en ce qu'**au moins une saillie (8) est formée dans une entaille (5) sur une paroi d'entaille (6), qui diffère d'au moins une saillie (8) sur l'autre paroi d'entaille (6) au niveau de la longueur (l₁) et/ou de la largeur (b₂) et/ou de la hauteur (h₁) .
